# EUROPÄISCHE PATENTSCHRIFT

(11) **EP 2 003 949 B1**
(45) Veröffentlichungstag und Bekanntmachung des Hinweises auf die Patenterteilung: **04.03.2015**
(21) Anmeldenummer: 07724172.7
(22) Anmeldetag: 11.04.2007
(51) Int. Cl.: A01G 7/02, A01G 1/00, A01G 9/18

(54) **Verfahren zur Wachstumsbeschleunigung**
Process to accelerate growth
Procédé d'accélération de croissance

(30) Priorität: 13.04.2006 DE 102006017813
(43) Veröffentlichungstag der Anmeldung: 24.12.2008
(73) Patentinhaber: Linde AG, 80331 München (DE)
(72) Erfinder: KRABBENDAM, Peter, NL-2046 AA Haarlem (NL); OUDSHOORN, Felix, Pieter, NL-1113 GS Diemen (NL)
(74) Vertreter: Gellner, Bernd
(86) Internationale Anmeldenummer: PCT/EP2007/003231
(87) Internationale Veröffentlichungsnummer: WO 2007/118662

(56) Entgegenhaltungen:
- EP-A- 1 269 815
- EP-A2- 0 561 193
- F. A. BAZZAZ; R. W. CARLSON: "The response of plants to elevated CO2", OECOLOGIA, vol. 62, no. 2, 1 May 1984 (1984-05-01), pages 196-198, XP008140439, ISSN: 0029-8549, DOI: 10.1007/BF00379013

## Beschreibung

Die Erfindung betrifft ein Verfahren zur Wachstumsbeschleunigung von Rasen, insbesondere in Fußballstadien und dergleichen.

Während Fußballstadien und Sportarenen in früheren Zeiten noch häufig unüberdachte Tribünen besaßen, welche mit einem relativ sanften Steigungswinkel und mit einer gewissen Entfernung zu einem Rasenspielfeld angeordnet waren, beispielsweise getrennt durch Laufbahnen und Leichtathletik-Sporteinrichtungen, geht ein Trend dahin, die Tribünen bis an den Spielfeldrand von Fußballfeidern zu bauen, die Tribünen relativ steil anzuordnen, um dem Publikum einen guten Blick auf das Spielfeld zu ermöglichen und zudem derartige Fußballstadien zumindest im Bereich der Tribünen, zum Teil jedoch auch vollständig, zu überdachen.

Bei diesen modernen Fußballstadien ist durch die Überdachung einerseits und dadurch, dass, wenn überhaupt, nur ein Bereich direkt über dem Rasen unüberdacht ist, der Lichteinfall und die Lichtintensität außerordentlich begrenzt.

Insbesondere in den Wintermonaten, in denen der Rasen auf Grund der Temperatur kaum wächst, denn übliche, den Rasen ausbildende Grassorten wachsen unter 5° C Lufttemperatur kaum noch, werden derartige Sportrasen außerordentlich stark beansprucht.

Da insbesondere im Bereich des Profifußballes die Frequenz der Spiele steigt, ist im Winter teilweise jedoch auch schon im Sommer die Regenerationsfähigkeit der Graspflanzen nicht mehr so hoch, dass die Schädigungen durch den Spielbetrieb ausgeglichen werden könnten.

Es ist deshalb bekannt, derartige rasenbildende Graspflanzen landwirtschaftlich anzubauen und entsprechend als Rasen zu konditionieren, den Rasen bei Bedarf abzutragen und in Rollen aufzurollen und in Fußballstadien einzulegen, nachdem dort die entsprechende Rasennutzschicht entfernt wurde.

Hierbei ist von Nachteil, dass der Ausbau einer geschädigten Rasenfläche und der Einbau einer neuen Rasenfläche außerordentlich kostspielig sind. Oftmals besteht das Problem, dass eine neue Rasenfläche unter den im Stadion herrschenden Bedingungen das Wachstum einstellt.

Um die Regenerationsfähigkeit eines Rasens zu erhöhen, ist es bekannt, über den Rasen Bahnen zu ziehen, in denen Leuchtdioden enthalten sind. Dieses von der Firma Intravision unter der Handelsbezeichnung "Lumigren" am Markt erhältliche System besteht im Wesentlichen aus einem Schienensystem, auf dem die Stoffbahnen mit integrierten Leuchtdioden ausgerollt werden können und einem Belüftungssystem, das eine Luftzirkulation bewirkt.

Die Firma SGL, Waddinxveen, Niederlande führt ein Rasenmanagement durch, bei welchem das Wachstum des Rasens, das auf den Rasen einwirkende Licht, die Temperatur, die Wasserzufuhr, der Düngereintrag und das Mähen gemessen werden. Die einzelnen Wachstumsparameter werden individuell verändert. Gegebenenfalls wird der Rasen künstlich beleuchtet.

Dieses System verbessert zwar die Lichtversorgung der Graspflanzen. Insbesondere im Winter kann jedoch ein stark geschädigter Rasen hiermit nicht mehr regeneriert werden.

Aus der EP 0 561 193 A2 geht ein Verfahren und eine Vorrichtung zur Wachstumsförderung von Pflanzen hervor. Durch die Vorrichtung wird das Gras nahezu vollständig abgedeckt. Es ist vorgesehen zur Förderung des Wachstums von Gras unter einer geschlossenen Abdeckung, das Gras innerhalb von 24 Stunden mittels künstlicher Lichtquellen etwa 8 bis 12 Stunden zu belichten. Die Atmosphäre der das Gras ausgesetzt ist wird dabei durch zwei Lüfter ständig oder intervallweise bewegt und oder ständig oder von Zeit zu Zeit ausgetauscht. Die Kohlendioxidmenge die vom Gras aufgenommen wird soll kontinuierlich oder in Zeitabschnitten der Atmosphäre des Raumes durch eine Einrichtung zur Einbringung von Kohlendioxid zugeführt werden. Durch dieses Verfahren und diese Vorrichtung soll es möglich sein Gras zu jeder Jahreszeit entsprechend der natürlichren Vorraussetzungen wachsen zu lassen. Die Vorrichtung kann in flache Bodenplatten zur Abdeckung einer Rasenfläche integriert werden.

In der EP 1 269 815 A ist eine Vorrichtung zur Begasung von Rasenflächen beschrieben. Dabei wird durch einen sich über eine Rasenfläche erstreckenden Gaskanal der Rasenfläche ein Gasstrom zugeführt. Der Gaskanal ist an einem offenen Ende an ein Druckaggregat angeschlossen und am anderen Ende geschlossen. Dieser weist an einem der Rasenfläche zugewandten Bereich Austrittsöffnungen auf. In einer Weiterbildung der Vorrichtung sind Sensoren vorgesehen, die eine oder mehrere Messgrößen, wie Umgebungstemperatur, Umgebungsluftfeuchte, Rasentemperatur, Rasenfeuchte, Gaseintrittstemperatur, Gasaustrittstemperatur, Eintrittsgasfeuchte, Austrittsgasfeuchte, Kohlendioxidanteil sowie Düngeranteil erfassen und zu einem Regel- und Steuergerät übertragen, mit dem das Druckaggregat und/oder die Zuführung von Wasserdampf und/oder Kohlendioxid und/oder Dünger und/oder die Heizvorrichtung eingestellt werden können.

In F. A. Bazzaz et al.; "The response of plants to elevated CO₂" wird der Einfluss von CO₂ auf das Wachstum von Pflanzen untersucht. Darin ist angegeben, dass einzelne Pflanzen sich sehr unterschiedlich bezüglich eines steigenden CO₂-Anteils verhalten, so dass der Wettbewerb der Pflanzen durch einen sich veränderten CO₂-Gehalt in der Luft erheblich verändert werden kann. Weiterhin wird ausgeführt, dass bestimmte Pflanzentypen ein stärkeres Wachstum mit zunehmenden CO₂-Gehalt entwickeln, wohingegen andere Pflanzentypen auf einen zunehmenden CO₂-Gehalt nicht reagieren.

Aufgabe der Erfindung ist es, ein Verfahren zur Wachstumsbeschleunigung und Regeneration eines Rasens zu schaffen, mit dem hohe Wachstums- und Regenerationsphasen auch im Winter möglich sind.

Die Aufgabe wird mit einem Verfahren mit den Merkmalen des Anspruch 1 gelöst.

Vorteilhafte Weiterbildungen sind in den hiervon abhängigen Unteransprüchen gekennzeichnet.

Das erfindungsgemäße Verfahren sieht vor, über einer begrenzten Rasenfläche einen abgeschlossenen Raum zu errichten, wobei in dem abgeschlossenen Raum Beleuchtungseinrichtungen vorhanden sind, welche den unter der Beleuchtungseinrichtung befindlichen Rasen beleuchten. Die Beleuchtung wird hierbei vorzugsweise mit einer Wellenlänge durchgeführt, die in besonders guter Weise die Photosynthese der den Rasen ausbildenden Graspflanzen fördert. Insbesondere geeignet sind hierfür Quecksilberdampflampen, gegebenenfalls mit entsprechenden Filtern, oder Leuchtstoffröhren mit dem entsprechenden Lichtspektrum.

Darüber hinaus wird in den abgeschlossenen Raum CO₂ eingeleitet, wobei die CO₂-Konzentration in dem abgeschlossenen Raum permanent überwacht wird und die CO₂-Zuleitung entsprechend gesteuert wird. Hierdurch kann eine gegenüber der natürlichen Konzentration (ca. 350 ppm CO₂) deutlich erhöhte CO₂-Konzentration von zumindest 500 ppm CO₂ und vorzugsweise zumindest 800 ppm CO₂ eingestellt werden. Bei dem aus der EP 0 561 193 A2 bekannten Verfahren wird eine natürliche CO₂-Konzentration eingestellt. Verbrauchtes CO₂ wird hierbei ersetzt. Durch die niedrige Anbringung der Lampen ist ein regelmäßiger Luftaustausch notwendig, um die gewünschte Temperatur nicht zu überschreiten, weshalb es auch nicht möglich ist, die CO₂-Konzentration deutlich über den natürlichen Wert auf Dauer zu halten.

Durch das Vorhandensein von CO₂ wird die mittels des Lichtes eingebrachte Wärme besser zurückgehalten ("Treibhauseffekt"), wodurch die Erwärmung im abgeschlossenen Raum unterstützt wird.

Da alle modernen Fußballstadien und alle modernen Sportstätten, die einen Sportrasen besitzen, über eine entsprechende Rasenheizung verfügen, werden die Größe bzw. das Volumen des abgeschlossenen Raumes so gewahlt, dass in einer hinreichenden Zeit das Raumvolumen von der Rasenheizung auf eine Temperatur derart aufgewärmt wird, dass ein Wachstum der den Rasen ausbildenden Graspflanzen möglich ist. Zudem kann die Erwärmung allein oder zusätzlich durch die Abwärme der Beleuchtungseinrichtung bewerkstelligt werden.

Beim Vorhandensein einer Rasenheizung oder der Abwärme der Beleuchtungseinrichtung kann zudem auf Umwälzmittel zum Umwälzen des eingespeisten Kohlendioxids verzichtet werden, da sich diese Umwälzung durch Konvektion vollzieht.

Vorzugsweise werden die Leuchtmittel in einer Höhe von 1,80 m bis 2,80 m über der Rasenfläche angeordnet.

Das CO₂ kann am obersten Punkt oder im obersten Bereich des Raumes eingespeist und fällt durch sein im Vergleich zu Luft höheres Gewicht nach unten.

Bevorzugt handelt es sich bei dem umschlossenen Raum um ein Zelt oder zeltartiges Gebilde aus einer im Wesentlichen gasdichten Zeltwand, die von einem oberen Bereich oder einem Zeltdach oder einer Zeltdachwandung bis auf den Rasen reicht.

Um Gasverluste zu verhindern und auch Temperaturverluste klein zu halten, ist die Zeltwandung beispielsweise aus einer Folie gegebenenfalls in Kombination mit einer textilen reißfesten Schicht ausgebildet.

Bei einer bevorzugten Ausführungsform besitzt die Zeltwandung isolierende Eigenschaften, in dem sie eine Schaumstoff-Folienschicht umfasst oder zwischen einer inneren Folienwandung und einer äußeren Folienwandung Luftkammern angeordnet sind.

Bevorzugt kann das Zelt an einer unteren, auf dem Rasen stehenden Kante verstärkt ausgebildet sein, wobei nach unten reichend umlaufende klingenartige Elemente in den Untergrund eingreifen und so einen sicheren Stand und eine gute Abdichtung ermöglichen.

Das Verfahren sieht zudem vor, einen derartigen umschlossenen Raum oder mehrere dieser umschlossenen Räume auf einer Rasenfläche aufzustellen, auf den Rasen die Beleuchtung und das CO₂ einwirken zu lassen und nach einer hinreichenden Einwirkungszeit das Zelt zu versetzen. Hierzu können erfindungsgemäß neben einer manuellen Versetzung auch eine automatisierte Versetzung mit einem Schienensystem und/oder Seilzugsystem verwendet werden. Bei einer solchen Ausführungsform kann anstelle einer Verankerung des Raumes auf dem Boden an der Unterseite Rollen vorhanden sein, mit denen der umschlossene Raum über den Rasen gezogen werden kann. Hierfür sind allerdings auch Kufen oder Schienen denkbar.

Die Erfindung wird anhand einer Zeichnung beispielhaft erläutert. Es zeigen dabei:

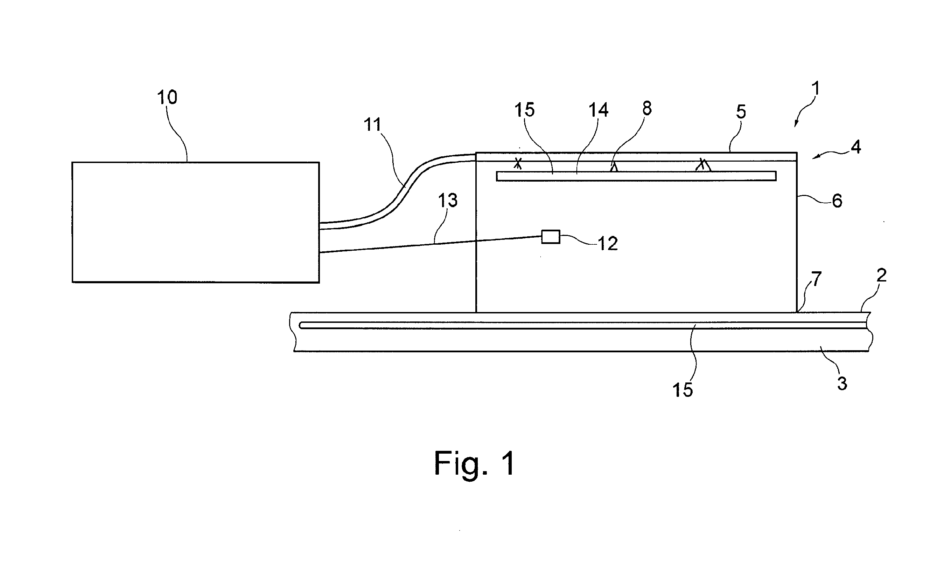

- Figur 1:: eine Vorrichtung zum Durchführen ein erfindungsgemäßes Verfahren in einem Längsschnitt,
- Figur 2:: die obengenannte Vorrichtung stark schematisiert in einem Querschnitt,
- Figur 3:: eine weitere Ausführungsform der obengenannten Vorrichtung in einer schematischen perspektivischen Ansicht ohne Beleuchtungsmittel und ohne Ausströmvorrichtung, und
- Figur 4:: die in Figur 3 gezeigte Ausführungsform im zusammengefalteten Zustand in einer perspektivischen Ansicht.

Die Vorrichtung zum Durchführen ein erfindungsgemäßes Verfahren 1 ist auf einem zu regenerierenden Rasen 2 angeordnet, der auf einem Untergrund 3 wächst.

Die Vorrichtung 1 umfasst einen umschlossenen Raum 4 mit einer Deckenwandung 5 und Seitenwandungen 6. Die Deckenwandung 5 und die Seitenwandungen 6 sind vorzugsweise fest miteinander verbunden und besitzen gegebenenfalls eine nicht gezeigte Tragstruktur.

Der umbaute Raum 4 ist insbesondere ein Zelt 4, welches nach unten offen ist und mit Seitenwandungskanten 7 auf dem Rasen 2 aufsteht.

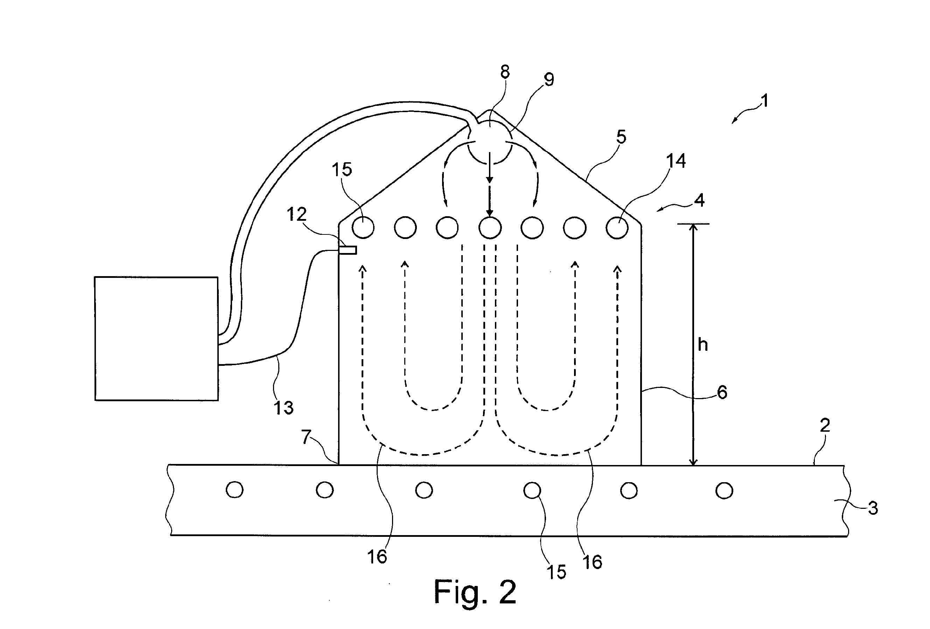

Der umschlossene Raum 4 bzw. das Zelt 4 kann quaderförmig ausgebildet sein oder ein abfallendes Pultdach oder ein Spitzdach (Fig. 2) besitzen.

In einem oberen Bereich bzw. unterhalb einer Dachwandung 5 ist eine Ausströmvorrichtung 8 für Gas vorhanden, wobei die Ausströmvorrichtung 8 beispielsweise ein rohrartiges Gebilde 8 ist, welches sich über eine Teillänge oder die gesamte Länge des Raumes 4 erstreckt. Das Rohr 8 bzw. rohrartige Gebilde 8 besitzt Ausströmöffnungen 9, aus denen ein CO₂-Gas ausströmen kann.

Das CO₂-Gas stammt aus einem Gasspeicher 10, der mit einer entsprechenden Zuführleitung 11 mit dem rohrartigen Gebilde 8 verbunden ist.

Um zudem den CO₂-Gehalt in dem umschlossenen Raum 4 bzw. dem Zelt 4 zu überwachen, ist ein CO₂-Messgerät oder ein CO₂-Sensor 12 über eine Leitung 13 vorzugsweise mit dem Gasspeicher 10 verbunden, wobei eine entsprechende Steuereinrichtung (nicht gezeigt) zum Steuern/Regeln des Gasgehaltes vorhanden ist.

In einer Höhe h vom Boden 2 bzw. Rasen 2 gemessen ist in dem umschlossenen Raum 4 bzw. in dem Zelt 4 eine Beleuchtungseinrichtung 14 vorhanden, welche beispielsweise aus Glühlampen oder Gasentladungslampen besteht. Bevorzugt werden Photosyntheselampen verwendet, wie z.B. die von General Electric Comp. hergestellten und unter der Handelsbezeichnung Lucalox PSL vertriebenen Lampen.

Bei einer Ausführungsform der Beleuchtungseinrichtung 14 besteht diese beispielsweise aus Leuchtstoffröhren 15, welche sich in dem umschlossenen Raum 4 erstrecken.

Auf Grund einer im Boden 3 unterhalb des Rasens 2 vorhandenen Rasenheizung 17 kommt es innerhalb des umschlossenen Raumes 4 zu einer Zirkulation des aus dem rohrartigen Gebilde 8 ausströmenden und nach unten strömenden bzw. fallenden CO₂, wobei durch Konvektion bei einem mittigen Eintrag des CO₂ vom Dach her das CO₂ in den Randbereichen nach oben strömt (Pfeile 16 in Fig. 2).

Es wurde festgestellt, dass auch die Wärmeentwicklung der Beleuchtungseinrichtung 14 für die Ausbildung einer derartigen Konvektion völlig ausreichend ist, so dass auch in Stadien, in denen eine Rasenheizung 17 nicht vorhanden ist, eine ausreichende Konvektion sichergestellt ist.

Beim oben erläuterten Ausführungsbeispiel wird zum Zuführen des CO₂-Gases ein Rohr 8 verwendet. Es hat sich jedoch auch gezeigt, dass es im Rahmen der Erfindung möglich ist, anstelle eines solchen Rohres eine einzelne, punktförmige Düse zu verwenden, da durch die im umschlossenen Raum bestehende Konvektion für eine gleichmäßige Verteilung des CO₂-Gases gesorgt ist.

Die Beleuchtungsmittel werden in einer Höhe h von 1,80 m bis 2,80 m, bzw. 2,20 m bis 2,50 m, vorgesehen, wobei die CO₂-Zuleitung 8 etwa 20 bis 80 cm und vorzugsweise 50 cm über den Beleuchtungsmitteln vorgesehen wird.

Bei dem erfindungsgemäßen Verfahren und bei einer entsprechenden Vorrichtung ist von Vorteil, dass diese sehr einfach ausgebildet ist. Durch die gasdichte Abkapslung mittels eines umschlossenen Raumes 4 oder Zeltes 4 wird durch die Wärmeentwicklung der Leuchtmittel gegebenenfalls auch die Wärmeentwicklung durch eine Rasenheizung eine signifikante Temperaturerhöhung herbeigeführt, welche ausreicht, die den Rasen ausbildenden Graspflanzen ein Wachstum zu ermöglichen.

Durch die Wärmeentwicklung der Leuchtmittel zum Einen und gegebenenfalls einer Rasenheizung zum Anderen wird eine gleichmäßige CO₂-Konzentration durch konvektive Verteilung erzielt.

Die CO₂-Konzentration liegt im Bereich von 500 bis 1.500 ppm und vorzugsweise im Bereich von 800 bis 1.200 ppm CO₂ bzw. 800 bis 2000 ppm CO₂. Die natürliche CO₂-Konzentration beträgt ca. 350 ppm. Durch die erhöhte CO₂-Konzentration wird ein erheblich stärkeres Wachstum des Rasens 2 erreicht. Mit dem erfindungsgemäßen Verfahren und einer entsprechenden Vorrichtung wird selbst in kalten Wintermonaten und bei hoher Belastung der Rasenfläche in einfacher Weise durch eine höhere Lichtintensität als bei Tageslicht und eine hohe CO₂-Konzentration bei ausreichenden hohen Temperaturen optimale Bedingungen für den Rasen erzielt.

Die Erfinder konnten selbst in den Wintermonaten ein Wachstum von etwa 0,5 mm pro Stunde der den Rasen ausbildenden Graspflanzen beobachten. Die Außentemperaturen betrugen hierbei etwa 5°C bis 6°C. Die im Rasen gemessenen Temperaturen waren deutlich höher. Dies lag zum einem daran, dass eine Bodenheizung verwendet wurde. Jedoch hat auch der Wärmeeintrag durch die Lampen und die wärmerückhaltende Wirkung durch das Zelt und die CO₂-Konzentration zur Temperaturerhöhung im Rasen beigetragen. So wurde eine Temperatur von 21 °C im Rasen erzielt.

Die Zelte 4 bzw. umbauten Räume 4 haben etwa eine Grundfläche von 10 x 30 m bis 15 x 30 m bzw. von 30 m² bis 400 m². Kleinere Zelte 4 werden verwendet, um lokal sehr beanspruchte Bereiche, wie z.B. den Bereich um das Tor zu pflegen.

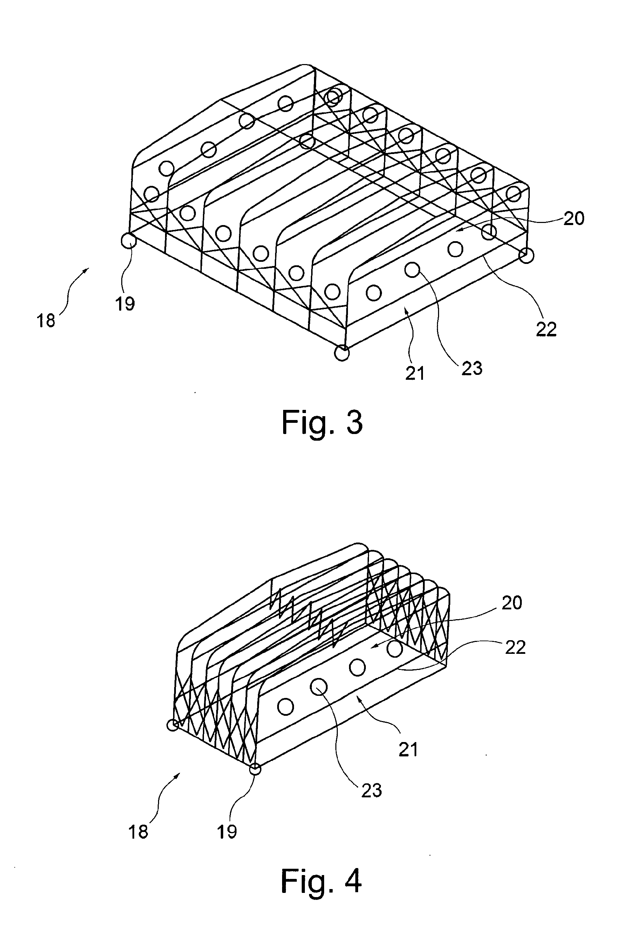

In einem weiteren Ausführungsbeispiel umfasst die Vorrichtung 1 mehrere miteinander verbundene Segmente 18 (Fig. 3). Der Aufbau entspricht dem des oben beschriebenen Ausführungsbeispiels.

Jedes der Segmente 18 weist eine Länge von ca. 5 m und eine Breite von ca. 6 m auf. Zwei bis fünf dieser Segmente 18 können einen Tunnel ausbilden der eine Fläche von ca. 150 m² abdeckt. Mit z.B. vier dieser Tunnel (ca 600 m²) wird die Rasenfläche eines Stadions (ca. 7000 m²) abschnittsweise regeneriert.

Die einzelnen Segmente 18 dieses Tunnels sind in ihrem unteren Randebereich mit Rädern 19 versehen, um auf dem zu regenerierenden Rasen 2 verschiebbar zu sein.

Die Segmente 18 der Vorrichtung 1 sind faltbar ausgebildet (Fig. 3). Im eingefalteten Zustand weisen sie eine Länge von ca. 80 cm auf und können mit einer einfachen Hubmaschine, beispielsweise einem Gabelstapler versetzt werden Die Deckenwandung 5 und die Seitenwandungen 6 sind vorzugsweise aus einer transparenten Folie ausgebildet, die lichtdurchlässig ist, um den zu regenerierenden Rasen 2 mit Sonnenlicht zu versorgen. Hierdurch können die Beleuchtungsmittel 14 bei Tageslichf ausgeschaltet werden, wodurch erheblich Energie eingespart wird.

In einer Höhe h vom Rasen 2 gemessen sind in jedem Segment 18 Beleuchtungseinrichtungen 14 in Form von beispielsweise sechs Lampen vorhanden. Die Lampen sind speziell für die Photosynthese entwickelte Assimilationslampen von Philips mit beispielsweise 600W und einem Beleuchtungsgrad von 100 bis 200 µmol/m²s.

Die Lampen sind in einer Höhe h von 1,6 m bis 2,0 m und vorzugsweise 1,8 m angeordnet.

Die Lampen erhöhen die Umgebungstemperatur um ca. 10°C. Dies genügt oftmals um auch im Winter eine Temperatur von 3°C bis 5°C zu erreichen die der Rasen zum Wachstum benötigt.

Bei hohen Außentemperaturen kann es zweckmäßig sein, die Lampen räumlich vom begasten Raum zu trennen, da diese die meiste Hitze erzeugen. Zu hohe Temperaturen wären schädlich für das Wachstum des Rasens 2. Deshalb weist die erfindungsgemäße Vorrichtung 1 gemäß einer weiteren Ausführungsform einen Beleuchtungsraum 20, in dem die Beleuchtungsmittel 14 angeordnet sind, und einen Regenerationsraum 21, in dem die Ausströmvorrichtung 8 angeordnet ist, auf. Der Beleuchtungsraum 20 und der Regenerationsraum 21 sind voneinander durch eine zweite Deckenwandung 22 getrennt, die transparent bzw. lichtdurchlässig ausgebildet ist, um die Sonneneinstrahlung durchzulassen. Die zweite Deckenwandung 22 schließt den Regenerationsraum 21 gasdicht ab und ist ca. 50 cm über dem Boden angeordnet.

Die Lampen sind in dem Beleuchtungsraum 20 unterhalb des Firstes angeordnet. Die Seitenwandungen 6 sind mit Belüftungsmitteln 23, die als Belüftungsöffnungen 23 ausgebildet sind versehen, um die Wärme der Lampen abzuführen. Durch die räumliche Trennung und/oder die geöffneten Belüftungsöffnungen 23 wird eine zusätzliche Erwärmung des Regenerationsraums 21 verhindert.

Die in Fig. 3 und 4 gezeigte Ausführungsform kann auch ohne Unterteilung des umschlossenen Raums 4 in einen Beteuchtungsraum 20 und einen Regenerationsraum 21 ausgebildet sein.

Die CO₂-Konzentration beträgt vorzugsweise zwischen 800 ppm CO₂ und 2000 ppm CO₂.

Erfindungsgemäß ist es vorgesehen, dass das Verfahren an einem bestimmten Ort vier bis zwölf Stunden und vorzugsweise zehn bis zwölf Stunden aufgestellt und betrieben wird und dann umgesetzt wird, um an einem nächsten Ort weiterbetrieben zu werden.

### Bezugszeichenliste:

- 1: erfindungsgemäße Vorrichtung
- 2: Rasen
- 3: Untergrund
- 4: Umschlossener Raum/Zelt
- 5: Deckenwandung
- 6: Seitenwandungen
- 7: Seitenwandungskanten
- 8: Ausströmvorrichtung
- 9: Ausströmöffnungen
- 10: Gasspeicher
- 11: Zuführleitung
- 12: CO₂-Sensor
- 13: Leitung
- 14: Beleuchtungseinrichtung
- 15: Leuchtstoffröhren
- 16: Pfeile
- 17: Rasenheizung
- 18: Segment
- 19: Räder
- 20: Beleuchtungsraum
- 21: Regenerationsraum
- 22: zweite Deckenwandung
- 23: Belüftungsmittel

## Patentansprüche

1. Verfahren zur Wachstumsbeschleunigung und Regeneration von Rasenflächen, wobei die Rasenfläche (2) zumindest teilbereichsweise oberseitig durch einen nach unten offenen allseitig umschlossenen Raum (4) umschlossen wird und wobei in den Raum (4) CO₂ eingeleitet wird und die vom Raum (4) überdeckte Rasenfläche (2) mit einer Beleuchtungseinrichtung (14) mit Licht beaufschlagt wird
**dadurch gekennzeichnet,**
**dass** das CO₂ im Raum (4) durch Konvektion durch die Abwärme der Beleuchtungseinrichtung (14) und/oder einer Rasenheizung (17) verteilt wird.

2. Verfahren nach Anspruch 1,
**dadurch gekennzeichnet,**
**dass** der Gasgehalt im Raum (4) auf 500 bis 2000 ppm CO₂ eingestellt wird.

3. Verfahren nach Anspruch 1 oder 2,
**dadurch gekennzeichnet,**
**dass** die CO₂-Konzentration auf zumindest 500 ppm CO₂ und vorzugsweise auf zumindest 800 ppm CO₂ eingestellt wird

4. Verfahren nach einem der vorhergehenden Ansprüche,
**dadurch gekennzeichnet,**
**dass** das CO₂ im höchsten Bereich des Raumes (4) eingeleitet wird.

5. Verfahren nach einem der vorhergehenden Ansprüche,
**dadurch gekennzeichnet,**
**dass** der Gasgehalt im Raum (4) auf 500 bis 1.500 ppm CO₂ eingestellt wird.

6. Verfahren nach einem der vorhergehenden Ansprüche,
**dadurch gekennzeichnet,**
**dass** die innerhalb des umbauten Raumes (4) vorhandene Luft zusätzlich mit Heizeinrichtungen aufgeheizt wird.

## Claims

1. Process to accelerate growth and regenerate turf surfaces, wherein the turf surface (2) is enclosed at least in subregions on the top by a space (4) which is open at the bottom and enclosed on all sides, and wherein CO₂ is introduced into the space (4) and the turf surface (2) covered by the space (4) is impinged with light using a lighting appliance (14), **characterized in that** the CO₂ in the space (4) is distributed by convection by the waste heat of the lighting appliance (14) and/or of turf heating (17).

2. Process according to Claim 1, **characterized in that** the gas content in the space (4) is set to 500 to 2000 ppm CO₂.

3. Process according to Claim 1 or 2, **characterized in that** the CO₂ concentration is set to at least 500 ppm CO₂, and preferably to at least 800 ppm CO₂.

4. Process according to any one of the preceding claims, **characterized in that** the CO₂ is introduced in the highest region of the space (4).

5. Process according to any one of the preceding claims, **characterized in that** the gas content in the space (4) is set to 500 to 1500 ppm CO₂.

6. Process according to any one of the preceding claims, **characterized in that** the air present within the surrounded space (4) is additionally heated using heating appliances.

## Revendications

1. Procédé pour l'accélération de la croissance et la régénération de pelouses, la pelouse (2) étant au moins dans une zone partielle entourée en haut par un espace (4) entouré de tous côtés, ouvert vers le bas, et du CO₂ étant introduit dans l'espace (4) et la pelouse (2) couverte par l'espace (4) recevant de la lumière par un dispositif d'éclairage (14) **caractérisé en ce que**
le CO₂ est réparti dans l'espace (4) par convexion par la chaleur émise par le dispositif d'éclairage (14) et/ou un chauffage de pelouse (17).

2. Procédé selon la revendication 1,
**caractérisé en ce que**
la teneur du gaz dans l'espace (4) est ajustée à 500 à 2 000 ppm de CO₂.

3. Procédé selon la revendication 1 ou 2,
**caractérisé en ce que**
la concentration de CO₂ est ajustée à au moins 500 ppm de CO₂ et de préférence à au moins 800 ppm de CO₂.

4. Procédé selon l'une quelconque des revendications précédentes,
**caractérisé en ce que**
le CO₂ est introduit dans la zone la plus élevée de l'espace (4).

5. Procédé selon l'une quelconque des revendications précédentes,
**caractérisé en ce que**
la teneur du gaz dans l'espace (4) est ajustée à 500 à 1 500 ppm de CO₂.

6. Procédé selon l'une quelconque des revendications précédentes,
**caractérisé en ce que**
l'air présent à l'intérieur de l'espace entouré (4) est an outre chauffé par des dispositifs de chauffage.
